(19) Europäisches Patentamt

European Patent Office

Office européen des brevets

(11) Publication number: **0 519 645 A2**

## (12) EUROPEAN PATENT APPLICATION

(21) Application number: **92305354.0**

(22) Date of filing: **11.06.92**

(51) Int. Cl.5: **C08L 23/08**, C08L 25/08, C08L 39/08, //(C08L23/08,25:08, 39:08),(C08L25/08,23:08,39:08)

(30) Priority: **21.06.91 US 718696**

(43) Date of publication of application:
**23.12.92 Bulletin 92/52**

(84) Designated Contracting States:
**BE DE FR GB IT NL**

(71) Applicant: **EXXON RESEARCH AND ENGINEERING COMPANY**
**P.O.Box 390, 180 Park Avenue**
**Florham Park, New Jersey 07932(US)**

(72) Inventor: **Peiffer, Dennis George**
**33 John Drive**
**Annandale, New Jersey 08801(US)**

(74) Representative: **Somers, Harold Arnold et al**
**ESSO Engineering (Europe) Ltd. Patents & Licences Mailpoint 72 Esso House Ermyn Way**
**Leatherhead, Surrey KT22 8XE(GB)**

(54) **Binary polyolefin blends.**

(57) The present invention provides a novel family of polyolefin-based polymeric blends which are injection moldable into high performance polymeric articles. These polymeric compositions comprise a blend of an ethylene-methacrylate copolymer with an amorphous copolymer containing a basic nitrogen functionality, such as styrene-4vinylpyridine copolymers (PSVP). Preferably, these polymeric materials will contain low levels ( 10.0 mole %) of interacting groups which are capable of forming interpolymeric complexes. It is also preferred that the carboxylic acid group of the ethylene-methacrylate copolymer be neutralized.

This invention relates to binary polymeric blends, suitable for example for use in injection molding.

Recently, there has been considerable interest in a class of copolymers having a hydrocarbon chain backbone and ion-containing units. Typically, the hydrocarbon component is the major constituent; i.e., ionomeric component is less than 10 mole %.

It is widely recognized that the incorporation of ionomeric units into a polymer structure has a substantial impact on the polymers' physical properties due to the association of these ionic moieties into microphase-separated regions.

It is an object of the present invention to provide blends of polymers, one of which contains ionomeric units.

The present invention provides novel polyolefin-based polymeric blends, which are suitable for injection molding into high performance polymeric articles. These polymeric compositions comprise a blend of an ethylene-methacrylate copolymer with an amorphous polymer containing a basic nitrogen functionality, for example styrene-4vinylpyridine copolymers (PSVP), and preferably having from about 4 meq to about 5 meq of basic nitrogen per 100g of amorphous polymer. Preferably, these polymeric materials will contain low levels ($\leq$ 10.0 mole %) of interacting groups which are capable of forming interpolymeric complexes. Also, it is especially preferred that the carboxylic acid group of the ethylene-methacrylate copolymer be neutralized.

Polymer blends yielding exceptional toughness, as compared to a nonfunctional, nonassociating blend, are possible by means of the present invention.

The polymeric compositions of the invention may also contain one or more of a non-polar process oil, a filler, a preferential plasticizer, a thermoplastic resin.

GENERAL DESCRIPTION

In general, the semicrystalline ethylene-methacrylate copolymer will have from about 0.1 to about 10 mole % pendant carboxylate groups, more preferably from 0.5 mole % to 9 mole %, and most preferably about 1.0 mole % to about 5 mole % pendant carboxylate groups. Also, in general, the carboxylate containing ethylene-methacrylate polymers of the instant invention may vary in number average molecular weight from 1,000 to 10,000,000; preferably from 5,000 to 500,000, most preferably from 10,000 to 200,000. These polymers may be prepared by methods known in the art; for example, see U.S. Patent 3,322,734, hereby incorporated by reference.

Preferably, the carboxylate groups of the ethylene-methacrylate copolymers utilized in the instant invention are neutralized with a basic material selected from the group consisting of elements of Groups IA, IIA, IB and IIB of the Periodic Table of the Elements, lead, tin, antimony, ammonium and alkylammonium ions and mixtures thereof. The Periodic Table of the Elements referred to is that found on the inside cover of Lange's Handbook of Chemistry, 11th Edition, McGraw-Hill, Inc. (1973).

Neutralization of the acid form of the carboxylate polymer can be accomplished via techniques well-known in the art. For example, by the addition of a solution of a basic salt to the acid form of the carboxylate polymer dissolved in a mixture of the aliphatic alcohol and non-reactive hydrocarbon solvent. The basic salt is dissolved in a binary solvent system consisting of xylene and an aliphatic alcohol. The anion of the basic salt is selected from a carboxylic acid having from about 1 to about 4 carbon atoms, a hydroxide or alkoxide and mixtures thereof. The cation of the basic salt is selected from the group consisting of elements of Groups IA, IIA, IB and IIB of the Periodic Table of the Elements, lead, tin, antimony, ammonium and alkylammonium ions and mixtures thereof. The preferred neutralizing agent is a metal acetate, more preferably zinc acetate or oxide. Sufficient basic salt is added to the solution of the acid form of the ethylene-methacrylate copolymer to effect neutralization. It is preferable to neutralize at least 10% of the acid groups, more preferably about 50%, most preferably 100%.

The basic nitrogen-containing polymer is selected from polymers having from about 4 meq. to about 500 meq. of basic nitrogen per 100 grams of polymer. The basic nitrogen-containing moiety may be conveniently selected from the groups containing primary, secondary, tertiary amines and nitrogen heterocyclic compounds. Included in these categories are pyridine, aniline, pyrrole, amide and other basic nitrogen-containing compounds. Specific polymers include styrene-4 vinylpyridine, t-butyl styrene-4-vinylpyridine, ethylene-4-vinylpyridine copolymers, propylene-4 vinylpyridine copolymers, acrylonitrile-4-vinylpyridine, methyl methacrylate-4 vinylpyridine copolymers, block copolymers of ethylene oxide/4-vinylpyridine, acrylic acid-4-vinylpyridine copolymers, ethylene-propylene-4-vinylpyridine terpolymers, isoprene-4 vinylpyridine, 4-vinylpyridine elastomers, copolymers and the like. The preferred base-containing polymers of the instant invention are styrene and 4-vinylpyridine and ethylene-propylene terpolymers with grafted 4-vinylpyridine. The former polymers are the preferred species. These materials are prepared through conventional solution, suspension and emulsion copolymerization techniques.

Copolymers of styrene/vinylpyridine are typically formed by the emulsion copolymerization of freshly distilled styrene and N-vinylpyridine monomers. This method of copolymerization is generally known to those well versed in the art. As noted previously, solution or suspension techniques may also be used to prepare these base-containing polymeric materials.

The binary blends may be made by combining a solution of the ethylene-methacrylate copolymer with a solution of basic nitrogen-containing polymer. Typical solvents for the ethylene-methacrylate copolymer include aliphatic alcohol-aromatic hydrocarbon mixtures, such as methanol-xylene mixtures. Typical solvents for the basic nitrogen-containing polymers include aromatic hydrocarbons, such as benzene, toluene and xylene. The concentration of the ethylene-methacrylate copolymer and the basic nitrogen-containing polymer in their respective solutions are about 0.001 to about 50.0 g/dl, more preferably about 0.01 to about 45.0, and most preferably about 0.01 to about 35.0. The combining of the two solutions permits an interaction between the two different copolymers to result in the formation of an interpolymer complex. After combining the solution, the solvent can be removed to provide the binary blend. Optionally, a solution of a plasticizer can be added and the solvents then removed. Optionally, these blends can be formed via melt processing procedures, i.e., solvent-less conditions. These procedures are well-known to those versed in the art.

In any event, the molar ratio of ethylene-methacrylate copolymer to the basic nitrogen-containing copolymer in the interpolymer complex is preferably 0.1 to about 20, more preferably about 0.5 to about 10, and most preferably about 1 to about 5.

It has been surprisingly found that a very important factor in determining the strength of the interaction between the basic nitrogen-containing copolymer and the ethylene-methacrylate copolymer is the nature of the counterion. There are, broadly speaking, three major classes of such counterions. The first class, which are less preferred, are those metals of Group IA and Group IIA, which include Li, Na, K, etc., Be, Mg, Ca, etc. It has been found that these species do not interact as strongly with nitrogen-containing groups as the more preferred species described below. These preferred species are commonly defined as members of the transition elements (see chemical text, Chemical Principles and Properties by J. M. Sienko and R. A. Plane, McGraw-Hill Book Co., 1974, page 19). These metal cations are best exemplified by zinc and interact strongly with pyridine and similar amines. As an example, a zinc neutralized ethylene-methacrylate copolymer interacts much more strongly with a styrene/vinylpyridine copolymer than does a magnesium or sodium neutralized system. It is for this reason that the transition elements are preferred, with zinc, copper, iron, nickel and cobalt being especially preferred. Antimony and lead are also suitable cations, as is aluminum.

As stated previously,, it is preferred to use a neutralized ethylene-methacrylate copolymer in the blends of the present invention. Nonetheless, the free acid of the ethylene-methacrylate copolymer may be used and it will also interact with the basic nitrogen-containing polymers. In this latter case, the interaction is a classic acid-base interaction, while with the neutralized copolymer, a true coordination complex is created, which is due to the donation of the electron pair of the nitrogen element.

Preferably, the blends of the present invention include a plasticizer. This can be added either to a solution or to the crumb of interpolymer complex. The plasticizer is desirably a preferential plasticizer selected from carboxylic acids having about 5 to about 30 carbon atoms, more preferably about 8 to about 22 carbon atoms, or basic salts of these carboxylic acids wherein the metal ion of the basic salt is selected from the group consisting of aluminum, iron, antimony, lead or Groups IA, IIA, IB or IIB of the Periodic Table of the Elements referred to previously and mixtures thereof.

The preferential plasticizer is incorporated into the neutralized polymer complex at about 0.1 to about 60 parts per hundred by weight based on 100 parts of the polymer complex, more preferably at about 5 to about 40, and most preferably at about 7 to about 25.

The resultant plasticized polymer blend, after isolation from solution, has a viscosity at 200°C and at a shear rate of 0.73 sec.$^{-1}$ of about $5 \times 10^4$ poise to about $1 \times 10^6$ poise, more preferably of about $5 \times 10^4$ poise to about $8 \times 10^5$ poise, and most preferably of about $8 \times 10^4$ poise to about $8 \times 10^5$ poise.

The plasticized polymer blend preferably is further blended with a filler and a non-polar backbone process oil by techniques well known in the art. For example, the blend composition can be compounded on a two roll mill. Other methods known in the art which are suitable for making these compositions include those methods employed in the plastic and elastomer industries for mixing polymer systems. An excellent polymer blend composition of this invention can be obtained through the use of a high shear batch intensive mixer called the Banbury. Alternatively, economic advantages in terms of time and labor savings can be obtained through the use of a Farrel Continuous Mixer, a twin screw extruder, or tandem extrusion techniques, which are continuous mixing types of equipment. The Banbury mixing device is the preferred batch type mixer, and the twin screw extruder is the preferred continuous mixer.

Fillers which may be employed in the present invention are preferably talcs, ground calcium carbonate, water precipitated calcium carbonate, or delaminated, calcined or hydrated clays and mixtures thereof. These fillers are incorporated into the blend composition at about 25 to about 300 parts by weight per hundred parts of polymer complex; more preferably at about 25 to about 250, and most preferably at about 25 to about 200. Typically, these fillers have a particle size of about 0.03 to about 20 microns, more preferably about 0.3 to about 10, and most preferably about 0.5 to about 10. The oil adsorption as measured by grams of oil absorbed by 100 grams of filler is about 10 to about 100, more preferably about 10 to about 85, and most preferably about 10 to about 75. Typical fillers employable in this invention are illustrated in Table I.

Table I

| Filler | Oil Absorption grams of oil/100 grams of filler | Specific Gravity | Average Particle Size Micron | pH |
|---|---|---|---|---|
| Calcium carbonate ground | 15 | 2.71 | | 9.3 |
| Calcium carbonate precipitated | 35 | 2.65 | .03-.04 | 9.3 |
| Delaminated clay | 30 | 2.61 | 4.5 | 6.5-7.5 |
| Hydrated clay | | 2.6 | 2 | 4/0 |
| Calcined clay | 50-55 | 2.63 | 1 | 5.0-6.0 |
| Talc Magnesium silicate | 60-70 | 2.75 | 2 | 9.0-7.5 |

The oils employable in the present invention are non-polar process oils having less than about 2 wt.% polar type compounds, as measured by molecular type clay gel analysis. These oils are selected from paraffinics ASTM Type 104B, as defined in ASTM-D-2226-70, aromatics ASTM Type 102 or naphthenics ASTM Type 104A, wherein the oil has a flash point by the Cleveland open cup of at least 350°F, a pour point of less than 40°F, a viscosity of about 70 to about 3000 ssu's at 100°F and a number average molecular weight of about 300 to about 1000 and, more preferably, about 300 to 750. The preferred process oils are paraffinics. Table II illustrates typical oils encompassed by the scope of this invention.

The oils are incorporated into the polymer complex at a concentration level of about 20 to about 200 parts by weight per hundred by weight of the polymer complex; more preferably at about 20 to about 175, and most preferably at about 25 to about 150.

Table II

| Type Oil | Viscosity ssu | Mn | Percent Polars | Percent Aromatic | Percent Saturates |
|---|---|---|---|---|---|
| Paraffinic | 155 | 400 | 0.3 | 12.7 | 87.0 |
| Paraffinic | 750 | 570 | 0.7 | 17.0 | 82.3 |
| Paraffinic | 2907 | 720 | 1.5 | 22.0 | 76.5 |
| Aromatic | 120 | --- | 1.3 | 70.3 | 28.4 |
| Naphthenic | 505 | --- | 0.9 | 20.8 | 78.3 |

Various other additives can be incorporated into the blend compositions to improve the physical properties, the appearance, the chemical properties of the formed elastomeric article or to modify the processability of the blend compositions.

A crystalline polyolefinic thermoplastic can be incorporated into the copolymer complex in minor proportions as a means for modification of the rheological properties of the blend compositions, as well as the stiffness of the elastomeric article. Typically, the crystalline polyolefinic thermoplastic is added to the polymer complex at a concentration level of about 0.1 to about 100 parts per hundred by weight based on 100 parts by weight of polymer complex, more preferably at about 0.1 to about 75, and most preferably at about 0 to 50.

The crystalline polyolefin is preferably a polymer of an alpha-olefin having a molecular weight for at least 2,000, preferably at least 10,000, and more preferably at least 20,000. This material comprises substantially an olefin, but may incorporate other monomers; for example, vinyl acetate, acrylic acid, methyl acrylate, ethyl acrylate, sodium acrylate, methyl methacrylate, ethyl methacrylate, methacrylic acid, sodium methacrylate, etc. The preferred polyolefins are selected from the group consisting of polymers of $C_2$ to $C_4$ alpha-olefins. Most preferably, the polyolefins are selected from the group consisting of polyethylene, polybutene, polypropylene and ethylene-propylene copolymers.

Both high and low density polyethylene are within the scope of the instant invention. For example, polyethylenes having a density from 0.90 to 0.97 gms/cc are generally included. Polypropylene polymers having intermediate and high densities are the preferred examples of the polypropylene materials used in the instant invention. These materials will have a density from 0.88 to 0.925 gms/cc. The polyethylene or polypropylene can also be combined as copolymers thereof, so long as adequate crystallinity is obtained in said combination. Thus, block copolymers wherein polyethylene or polypropylene is present in crystalline form are effective.

## BRIEF DESCRIPTION OF THE DRAWINGS

Figure 1 illustrates the Youngs modulus as a function of sodium and zinc neutralized ethylene-methacrylate content in blends of the present invention. PSVP is the other component of the blend.

Figure 2 illustrates tensile strength plotted against sodium and zinc neutralized ethylene-methacrylate content of blends of the present invention. PSVP is the other component of the blend.

Figure 3 illustrates elongation at break plotted against sodium and zinc neutralized ethylene-methacrylate content of blends of the present invention. PSVP is the other component of the blend.

## DETAILED DESCRIPTION OF THE INVENTION

The following examples will demonstrate the performance of an interpolymer complex consisting of an ethylene-methacrylate copolymer and a styrene-4-vinylpyridine copolymer.

### Example 1

The polymeric materials used in this study were salts of ethylene-methacrylate copolymer (EMA); specifically, the sodium and zinc salts. Elemental analysis of these copolymers were used to determine the ionic content; i.e., carboxylate level. The nominal carboxylate levels were 4.56 mole % and 2.9 mole % of the sodium (Na-EMA) and zinc (Zn-EMA) salts, respectively.

The styrene-4-vinylpyridine copolymer (SVP) was prepared through emulsion copolymerization of styrene and 4-vinylpyridine, using potassium persulfate as the initiator, sodium laurylsulfate as the surfactant and dodecylthiol as the chain transfer agent. The intrinsic viscosity for the copolymer was 1.85 dl/g in xylene at 25°C, which corresponds to a viscosity-average molecular weight of about 626,000 g mole$^{-1}$. The vinylpyridine content of this copolymer used was 8.2 mole % (1.10 wt.% nitrogen) based on nitrogen analysis.

The blends of the EMA resins with SVP were prepared by dissolving each component into warm (75°C) xylene/methanol (95/5) solution (10.0 g/dl). Dissolution occurred within one hour. The appropriate solution volumes were mixed in order to span a broad composition range in the blend. The mixtures were isolated through evaporation of the solvent mixture and the powders were throughoutly dried in a vacuum oven at 120°C.

The powders were formed into final form through compression molding into approximately 2" x 2" x 0.002" pads using the following conditions: 2 minutes preheat at 350°F, followed by a 3 minute press cycle at 29 tons (350°F) and, finally, a 4 minute cooling to room temperature, again under 29 tons pressure.

### Example 2

6

Differential scanning calorietry measurements were made on all the blends produced for this study. An examination of this data clearly confirms that the degree of crystallinity and melting temperature remains invariant over the complete composition range. Minor variation is found due to the counterion structure.

Example 3

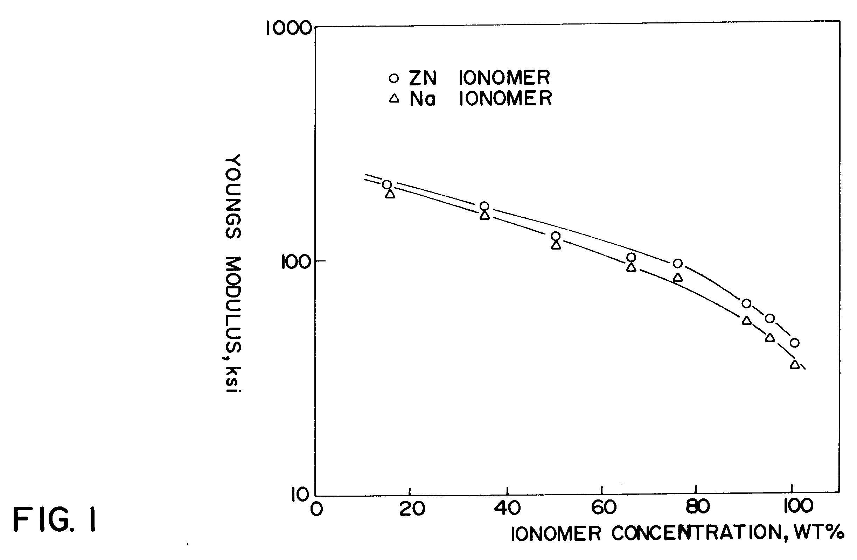

The mechanical properties of these blends are reported in Figures 1-3. The modulus-composition relationships for both types of blends are comparable, except for the modest enhancement of the Zn salt ionomer. In general, a monotonic decrease is observed in both blends as the level of the glassy component is decreased. At approximately 80/20 composition, a more rapid change in slope is noted. Apparently, at this point, the glassy component has less effect on the modulus than anticipated.

Example 4

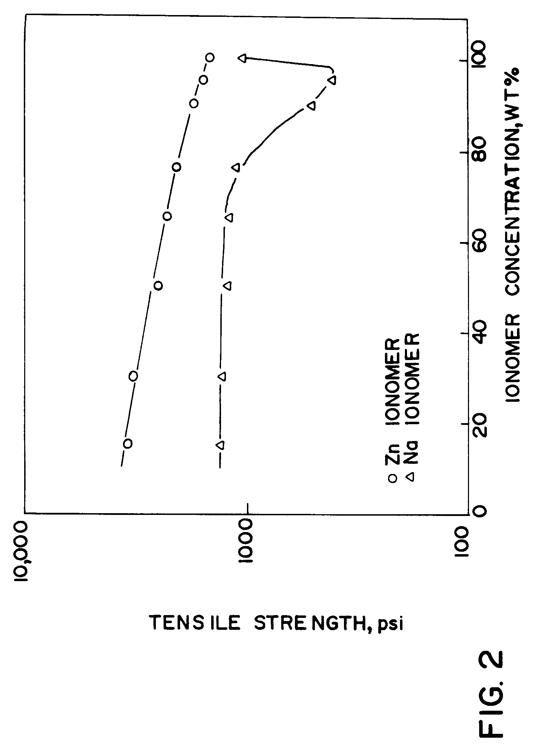

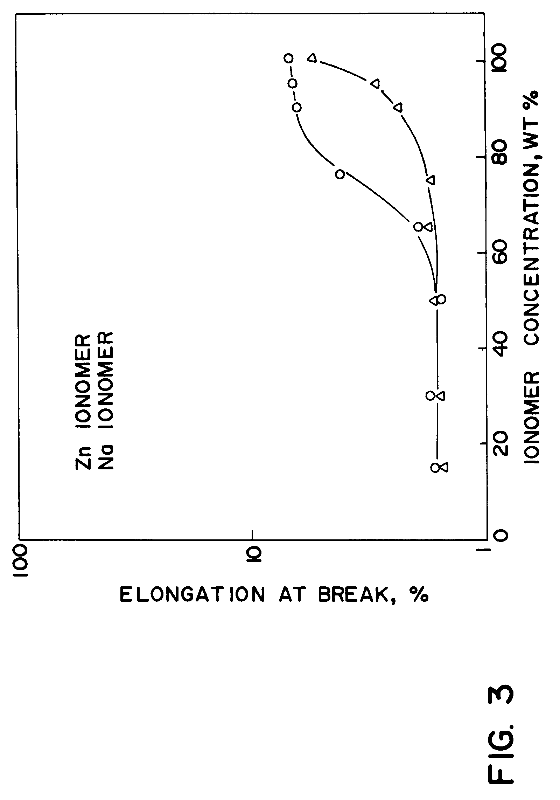

Representative tensile strength and elongation at break data are shown in Figures 2 and 3. Blends containing the Zn salt show substantially enhanced tensile strength over the entire composition range, as compared to the nonassociating Na-salt systems. This behavior can be rationalized in that the Zn salt and vinylpyridine system, specific interactions take place; whereas, in those containing the sodium salt, such interactions are very weak or completely absent. Therefore, it is not surprising to observe that the "interface", i.e., interspherulitic region between the two components, is weak in the latter blends. This is certainly reflected in the substantially reduced tensile strength. In fact, the data clearly shows that modest addition of the glassy component (Na salt) markedly reduces the tensile strength. It, however, does recover rapidly to a value comparable to the unblended glassy copolymer. The strength is controlled by the glassy matrix which apparently permeates the entire structure of the blend. Again, this behavior is comparable with the blending of unmodified polystyrene with the polyethylene-based ionomer.

Example 5

Further evidence of this preferential interaction of vinylpyridine moieties with zinc carboxylate groups can be seen from the elongation at break date (Figure 3). Substantially improved values are observed when the metal counterion interacts or associates with the base-containing copolymer.

**Claims**

1. A polymeric composition comprising:

    an ethylene-methacrylate copolymer having from about 0.1 mole % to about 10 mole % carboxylate groups blended with an amorphous basic nitrogen-containing polymer having from about 4 meq. to about 500 meq. of basic nitrogen per 100 g of amorphous polymer.

2. A composition according to claim 1 wherein the molar ratio of the copolymer to amorphous polymer is in the range of from about 0.1 to about 20 to 1.

3. A composition according to claim 1 or claim 2, wherein said carboxylate groups are neutralized with one or more counterions selected from ammonium, alkylammonium, antimony, aluminum, lead, iron, cobalt, nickel, and Groups IA IIA, IB and IIB of the defined Periodic Table of the Elements.

4. A composition according to claim 3 wherein the carboxylate groups are neutralized with zinc.

5. A composition according to any preceding claim 3 wherein the amorphous polymer is a styrene-4-vinylpyridine polymer.

6. A composition according to any preceding claim further including a preferential plasticizer selected from carboxylic acids having about 5 to about 30 carbon atoms; or basic salts of those carboxylic acids wherein the metal ion of the basic salt is selected from one or more of aluminum, iron, antimony, lead or Groups IA, IIA, IB or IIB of the defined Periodic Table of the Elements.

7. A composition according to claim 6, wherein the plasticizer is present in an amount ranging from about 0.1 to about 60 parts by weight based on 100 parts in total of the copolymer and amorphous polymer.

8. A composition according to any preceding claim further containing a filler and/or a non-polar process oil.

9. A composition according to any preceding claim further containing a crystalline, thermoplastic, olefin polymer.

10. An interpolymer complex comprising:

a blend of:
(a) an ethylene-methacrylate copolymer having 0.1 to 10 mole % of metal, preferably zinc, neutralized carboxylic acid groups with
(b) an amorphous styrene-vinylpyridine copolymer having from about 4 meq. to about 500 meq. of basic nitrogen per 100 g of amorphous copolymer, the molar ratio of copolymer to amorphous copolymer being in the range of from about 0.1 to about 20 to 1.

FIG. 1

EP 0 519 645 A2

FIG. 2

FIG. 3

EP 0 519 645 A2